# EUROPEAN PATENT SPECIFICATION

(11) **EP 3 398 898 B1**
(45) Date of publication and mention of the grant of the patent: **19.10.2022**
(21) Application number: 18168340.0
(22) Date of filing: 19.04.2018
(51) Int. Cl.: B66B 7/12

(54) **ROPE SWAY DETECTOR WITH TIME-OF-FLIGHT (TOF)-CAMERA**
SEILSCHWINGUNGSDETEKTOR MIT TIME-OF-FLIGHT (TOF)-KAMERA
DÉTECTEUR DE BALANCEMENT DE CÂBLE À L'AIDE D'UNE CAMÉRA DE TIME-OF-FLIGHT (TOF)

(30) Priority: 19.04.2017 US 201715491024
(43) Date of publication of application: 07.11.2018
(73) Proprietor: Otis Elevator Company, Farmington, Connecticut 06032 (US)
(72) Inventor: MIYAJIMA, Hiromitsu, Shibayama-machi, 289-1693 (JP); YAMADA, Atsushi, Shibayama-machi, 289-1693 (JP)
(74) Representative: Dehns

(56) References cited:
- WO-A1-2016/120373
- JP-A- 2009 166 939
- JP-A- 2014 009 098

## Description

### [Technical Field]

The present invention relates generally to an apparatus for detecting an abnormal condition of an elevator system. In particular, the present invention relates to an abnormal condition detection device of an elevator system relating to rope sway and a method for detecting abnormal condition of an elevator relating to rope sway.

### [Background Art]

In an elevator which is installed in a high-rise building, when building sway or shaking occurs due to earthquakes or strong winds, elevator ropes and cables resonate and the magnitude of the oscillation increases, which will cause the ropes and cables to collide against the hoistway walls or caught by elevator equipments installed in the hoistway.

In such a case, not only the ropes and the cables are damaged, but also the operation of the elevator may be disturbed. For these reasons, various efforts have been made to detect abnormalities related to building sway.

For example, JP-A-2009-166939 discloses an elevator system for detecting an abnormality of rope sway using at least two cameras installed on a horizontal plane of the hoistway near the top of the hoistway, and the abnormality detection is carried out by taking an image of elevator ropes from two different angles on the same horizontal plane and calculating a difference between the current position and the original position of the elevator ropes.

However, in such a configuration, especially in a case when the elevator is installed in a high-rise building, not only it is difficult to accurately estimate vibration mode of a plurality of elevator ropes, it is impossible to accurately detect an abnormal condition of each individual rope when the extremely long elevator ropes extending a few hundred meters in the hoistway swing simultaneously and come into contact with each other due to building sway.

JP-A-2015-113182 discloses a method for detecting an abnormality of elevator ropes with fewer cameras by installing a camera in the middle of the hoistway with respect to the vertical direction of the hoistway and capturing an image of the ropes obliquely with respect to the vertical direction.

However, when the elevator is installed in a high-rise building, behavior of a plurality of elevator ropes cannot be monitored along the entire length from the intermediate position to either ends of the hoistway that may be few hundred meters away from the cameras installed at the intermediate position. It is particularly difficult to detect rope sway in a dark hoistway of a high-rise building.

In addition, as the tension of an elevator rope also varies depending on the numbers of passengers in the elevator car, constructing an elevator abnormality detection system capable of dealing with all of these factors involves complication of the rope sway detection device or program. WO2016/120373 discloses a system for monitoring rope sway by using depth cameras to capture depth images of the elevator hoisting rope.

Therefore, there exists in the art a need for providing an elevator system, capable of detecting an abnormal condition relating to a building sway with less complicated structure even in the high-rise building and capable of performing an accurate elevator control in accordance with the estimated amplitude of the ropes or cables.

### [Summary of Invention]

According to one aspect of the present invention, an abnormal condition detection device of an elevator relating to rope sway is disclosed. The elevator includes a governor having a governor rope wrapped around a governor sheave and a tension sheave. The abnormal condition detection device includes a plurality of TOF cameras each disposed at different heights in the hoistway and configured to monitor rope sway of the governor rope and capture an image of the governor rope at each height of the TOF cameras. The image includes image data and distance data of the governor rope. The abnormal condition detection device further includes a rope sway detector connected to the TOF cameras for detecting rope sway of the governor rope and transmitting an abnormal condition detection signal to an elevator controller.

The rope sway detector is configured to detect an abnormal condition of the governor rope by estimating maximum amplitude of the governor rope based on a vibration mode of the governor rope and amplitude of the governor rope at each height of the TOF cameras, and the vibration mode of the governor rope is calculated from amplitude changes of the governor rope at each height of the TOF cameras in time series.

In some embodiments, the amplitude changes of the governor rope at each height of the TOF cameras are calculated based on the difference between an actual position and a normal position of the governor rope at each height of the TOF cameras in time series.

In some embodiments, the actual position of the governor rope is calculated based on rope sway of the governor rope in the transverse direction with respect to each TOF camera and a distance between each TOF camera and the governor rope.

In some embodiments, the governor rope extends along a first path and a second path between the governor sheave and the tension sheave in a looped manner. The governor rope is attached to the elevator car at the second path adjacent to the elevator car, and the TOF cameras are arranged adjacent to the first path of the governor rope which is not attached to the elevator car

In some embodiments, each TOF camera monitors rope sway of the governor rope along the first path.

In some embodiments, the elevator controller is configured to control operation of the elevator car based on the maximum amplitude of the governor rope.

In some embodiments, the rope sway detector is configured to detect the abnormal condition if the maximum amplitude exceeds a threshold value.

In some embodiments, the rope sway detector transmits to the elevator controller a signal to immediately stop the elevator car if the maximum amplitude exceeds a first threshold value.

In some embodiments, the rope sway detector transmits to the elevator controller a signal to stop the elevator car at the nearest floor if the maximum amplitude exceeds a second threshold value that is less than the first threshold value.

In some embodiments, the rope sway detector transmits to the elevator controller a signal to decelerate elevator car speed if the maximum amplitude exceeds a third threshold value that is less than the second threshold value.

In some embodiments, the governor rope further comprises a plurality of governor rope guards arranged along the vertical direction of the hoistway so as to accommodate the first path of the governor rope which is not attached to the elevator car.

According to another aspect of the present invention, a method for detecting abnormal condition of an elevator relating to rope sway is described. The method includes the steps of: monitoring rope sway of a governor rope using a plurality of TOF cameras each disposed at different heights in a hoistway; sending an image of the governor rope taken by each TOF camera to a rope sway detector, the image including image data and distance data of the governor rope; calculating vibration mode of the governor rope based on amplitude changes of the governor rope at each height of the TOF cameras on one vibration plane of the governor rope in time series; estimating a maximum amplitude of the governor rope based on the vibration mode of the governor rope and amplitude of the governor rope at each height of the TOF cameras; and detecting abnormal condition of the elevator if the maximum amplitude exceeds a threshold value.

In some embodiments, the method further includes the step of calculating an actual position of the governor rope in time series with respect to a normal position in a horizontal plane of the hoistway at each height of the TOF cameras, based on rope sway of the governor rope in the transverse direction with respect to each TOF camera and a distance between each TOF camera and the governor rope.

In some embodiments, the method further includes the step of calculating vibration direction and amplitude of the governor rope at each height of the TOF cameras in time series, based on the difference between the actual position and the normal position of the governor rope.

In some embodiments, detecting abnormal condition further includes transmitting a signal to immediately stop the elevator car to an elevator controller if the maximum amplitude exceeds a first threshold value.

In some embodiments, detecting abnormal condition further includes transmitting a signal to stop the elevator car at the nearest floor to the elevator controller if the maximum amplitude exceeds a second threshold value that is less than the first threshold value.

In some embodiments, detecting abnormal condition further includes transmitting a signal to decelerate elevator car speed to the elevator controller if the maximum amplitude exceeds a third threshold value that is less than the second threshold value.

These and other aspects of this disclosure will become more readily apparent from the following description and the accompanying drawings, which can be briefly described as follows.

### [Brief Description of Drawings]

Figure 1 is a schematic view of an elevator system.
Figure 2 is a partial schematic plan view of a hoistway of the elevator system shown in FIG. 1.
Figure 3 illustrates one possible arrangement of an abnormal condition detection device in accordance with the present invention.
Figure 4 illustrates oscillation of a governor rope arranged along the hoistway depending on the magnitude of building sway.
Figure 5A illustrates an image of the governor rope obtained by a TOF camera at a certain moment.
Figure 5B illustrates an actual position of the governor rope of FIG. 5A with respect to the base position in the horizontal plane of the hoistway.
Figure 6 is a flow diagram of controlling an elevator system based on real-time images of TOF cameras, in accordance with the present invention.

### [Description of Embodiments]

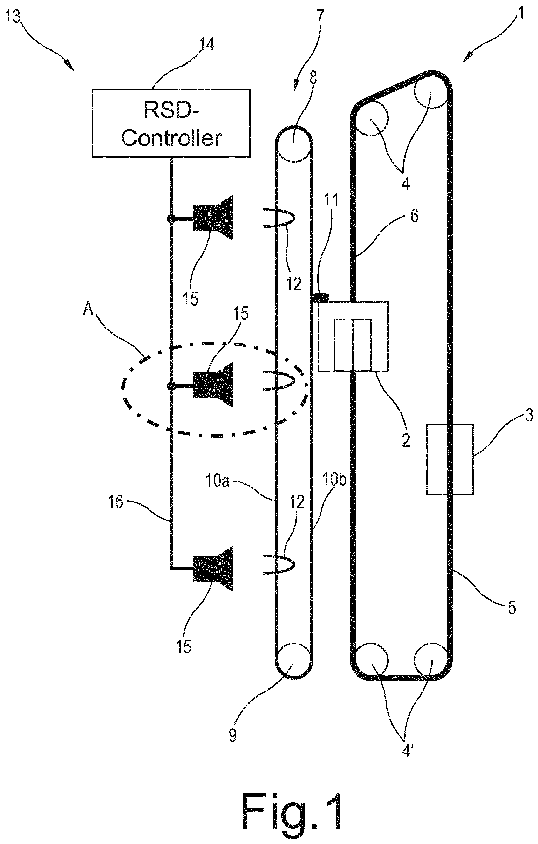

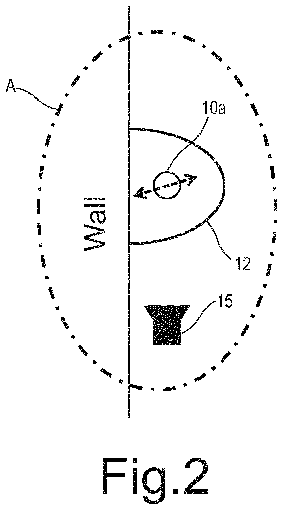

Figure 1 shows a schematic view of an elevator system 1, in accordance with an embodiment of the present invention. Figure 2 shows a plan view (horizontal plane) of a hoistway shown by A in FIG. 1. The elevator system 1 includes an elevator car 2 configured to move vertically upward and downward within a hoistway. The elevator system 1 also includes a counterweight 3 operably connected to the elevator car 2 via a plurality of sheaves 4. The counterweight 3 moves in a direction generally opposite the movement of the elevator car 2. Further, as shown in FIG. 1, on the lower side of the elevator car 2 and the counterweight 3, the elevator car 2 and the counterweight 3 are connected to one another by a plurality of compensation ropes 5 wrapped around compensation sheaves 4' and extending from the bottom of the hoistway that can be used to offset the weight of a plurality of main ropes 6.

Furthermore, a governor 7 for limiting the speed of the elevator car 2 is installed in the hoistway. As shown in FIG. 1, the governor 7 includes a governor sheave 8 generally located in a machine room at the top of the hoistway, a tension sheave 9 located at the bottom of the hoistway, and a governor rope 10 wrapped around the governor sheave 8 and the tension sheave 9. The governor rope 10 extends along a first path 10a and a second path 10b between the governor sheave 8 and the tension sheave 9 in a looped manner. The governor rope 10 is attached to the elevator car 2 via safeties 11 at the second path 10b that is adjacent to the elevator car 2.

As shown in FIG. 1, the governor 7 further includes a plurality of governor rope guards 12 arranged along the vertical direction of the hoistway (i.e. along the moving direction of the elevator car 2) so as to accommodate the first path 10a of the governor rope that is not attached to the elevator car 2 and thereby limit the sway of the governor rope 10a caused by building sway due to earthquakes or strong winds. It should be understood that the configurations, arrangements and/or the number of sheaves 4, 4' and governor rope guards 12 are not limited to the embodiments of the present invention and, thus, various configurations, arrangements and numbers of components may be employed.

Next, the arrangement of the rope sway detector with time-of-flight (TOF) cameras in accordance with the present invention will be described with reference to FIGS. 1 and 2. As shown in FIG. 1, the rope sway detector 13 in accordance with one embodiment of the present invention includes a rope sway detector (RSD) controller 14 and more than one TOF cameras 15 each disposed at different heights in the hoistway. For example, three TOF cameras 15 are installed in the hoistway at the one-fourth (1/4), one-half (1/2), and three-fourths (3/4) positions of the length of the first path 10a from the governor sheave 8. RSD controller 14 is generally provided in a machine room above the top floor of a building or provided in an operation control panel (not shown) arranged at any specific location in a building.

As shown in FIGS. 1 and 2, each TOF camera 15 is disposed proximity to the first path 10a of the governor rope which is not attached to the elevator car 2, and directed to the first path 10a of the governor rope in a horizontal direction so as to monitor rope sway of the governor rope 10a. Each TOF camera 15 is connected to the RSD controller 14 via a known wiring 16 including, but not limited to, Ethernet. Each governor rope guard 12 can be placed in any position that is out of the camera's range when the TOF camera 15 is taking an image of the governor rope 10 and that can prevent the governor rope 10 from colliding against the TOF camera 15 upon occurrence of a building sway during earthquakes, etc.

One advantage of adopting TOF camera instead of a conventional camera is that it not only makes it possible to reliably detect the oscillation of the governor rope 10 in total darkness, but also makes it possible to easily detect oscillations of the governor rope 10 in every direction in a horizontal plane (X-Y plane) with a single camera, since one single TOF camera 15 can detect rope sway in two different vector directions simultaneously, i.e. the transverse direction (left-right direction) and the backward and forward direction (the direction towards and away from the TOF camera 15) with respect to the camera's view.

Furthermore, in the present invention, utilizing a single governor rope 10 for detecting an abnormal condition of an elevator system relating to building sway can eliminate the need for monitoring a plurality of main ropes 6 as in the conventional building sway detection systems, which will improve accuracy of abnormal detection in the elevator system. Specifically, since the governor rope 10 is tightened by the governor sheave 8 and the tension sheave 9 over the entire length of the hoistway and, hence, the tension of the governor rope 10 is theoretically constant, the natural vibration mode of the governor rope 10 can be obtained more accurately than the main ropes 6.

Moreover, the length of the main ropes 6 between the elevator car 2 and the sheaves 4 varies as the elevator car 2 moves in the hoistway. As the length of the main ropes 6 between the elevator car 2 and the sheave 4 varies, amplitude and vibration mode of the main ropes 6 often change as well. However, since the RSD controller 14 in accordance with the present invention utilizes monitoring data of the first path 10a of the governor rope extending along the entire length of the hoistway, there is no need to consider change in amplitude and change in vibration mode of the main ropes 6 in response to length change of the main ropes 6 between the elevator car 2 and the sheaves 4 when the elevator car 2 moves in the hoistway.

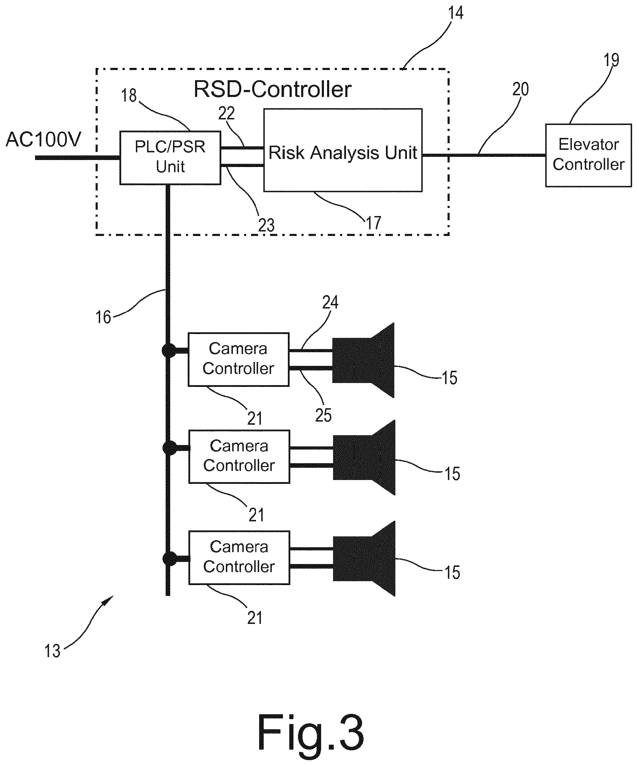

Next, the configuration of the RSD controller 14 in accordance with the present invention will be described with reference to FIG. 3.

RSD controller 14 includes a risk analysis unit 17 and a power line communication/power supply (PLC/PSR) unit 18. The RSD controller 14 is generally arranged in a machine room (not shown) above the top floor of a building or arranged in an operation control panel (not shown) arranged at any specific location in a building.

The risk analysis unit 17 is connected to an elevator controller 19 via a network 20 including, but not limited to, a controller area network (CAN) so as to control the operation of the elevator car 2 based on the magnitude of the oscillation of the governor rope 10 as will be described later. The elevator controller 19 is generally responsible for controlling the operation of the elevator system, including elevator group control, elevator security, elevator speed, etc.

The risk analysis unit 17 is also connected through PLC/PSR unit 18 to a plurality of camera controllers 21 associated with respective TOF cameras 15 arranged as described above, and configured to receive an image of the governor rope 10 obtained from each TOF camera 15 in real time.

The elevator system 1 includes an alternating current (AC) power source (e.g. AC 100V), and the AC power is provided to the PLC/PSR unit 18. The PLC/PSR unit 18 is configured to convert the AC power to direct current (DC) power for supplying the DC power (e.g. DC 24V) through line 23 to the risk analysis unit 17. The PLC/PSR unit 18 is interconnected with the risk analysis unit 17 via a local area network 22 including but not limited to Ethernet and also interconnected with a plurality of camera controllers 21 associated with respective TOF cameras 15 via a communication line 16 including but not limited to power line communication (e.g. AC 100V).

Three TOF cameras 15, as described in detail with reference to FIG. 1, are installed at different heights in the hoistway at equal intervals with respect to the first path 10a of the governor rope 10 and configured to monitor the rope sway of the governor rope 10 at each height of the TOF cameras and transmit real-time image of the governor rope 10 to the RSD controller 14 via a camera controller 21. Each TOF camera 15 is interconnected with a corresponding camera controller 21 via a local area network 24 such as Ethernet and receives electric power through line 25. It should be understood that the abnormality detection system relating to building sway in accordance with the present invention may include more than four TOF cameras 15 arranged in the hoistway.

Although the RSD controller 14 in accordance with the present invention is described as a controller independent of the elevator controller 19, it may be implemented in the elevator controller 19 as a part of the operation control unit.

Next, a method of estimating the maximum amplitude of the governor rope 10 using the RSD controller 14 in accordance with the present invention will be described.

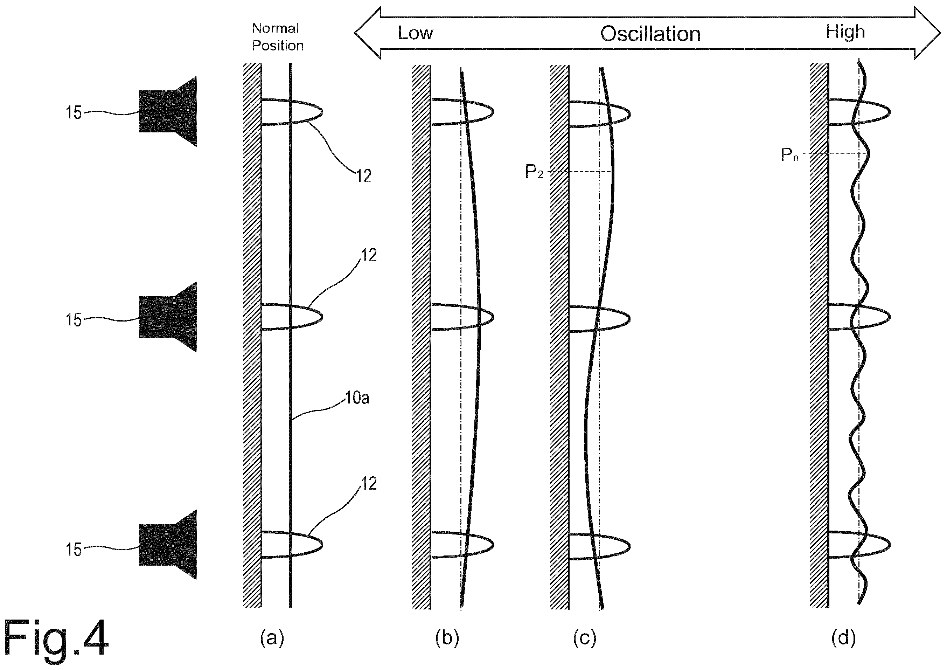

As shown in FIG. 4, three TOF cameras 15 disposed at different heights in the hoistway, for example, at the one-fourth (1/4), one-half (1/2), and three-fourths (3/4) positions of the length of the first path 10a, are monitoring the rope sway of the governor rope along the first path 10a which is not attached to the elevator car 2. A real-time image is transmitted via camera controller 21 and power line communication 16 to the RSD controller 14. The risk analysis unit 17 incorporated in the RSD controller 14 receives images from each TOF camera 15 in real time.

As shown in FIG. 4 (a), if building sway does not occur, oscillation of the governor rope 10 as well as oscillation of the main ropes 6 do not occur accordingly and, hence, the governor rope 10 is in the normal position (base position).

On the other hand, if building sway occurs when the building is subjected to strong winds or earthquakes, it can be recognized that the governor rope 10 oscillates and sways with respect to base position (indicated by dashed line) as shown in FIGS. 4 (b)-(d) depending on the magnitude of the oscillation.

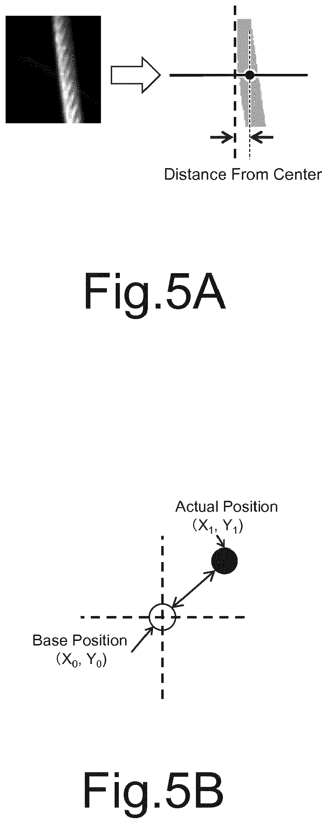

In this case, each TOF camera 15 captures real-time image of the governor rope 10 swinging from side to side with respect to the normal position (base position). For example, FIG. 5A illustrates an image of the governor rope 10 at a certain moment. It can be seen that the governor rope 10 sways from the base position to the right side. However, unlike conventional cameras, the TOF camera 15 can track the oscillation of the governor rope 10 in any direction in a horizontal plane of the hoistway with respect to the normal position (base position) with a single camera, since the TOF camera 15 can identify the distance from the camera to the governor rope 10 at the same time of identifying the oscillation of the governor rope 10a in a transverse direction (left-right direction).

The risk analysis unit 17 of the RSD controller 14 receives real-time image of the governor rope 10 taken in the horizontal direction of the hoistway by each TOF camera 15. The image includes both image data and distance data regarding the governor rope 10. As shown in FIG. 5B, the analysis unit 17 then calculates the actual position (±X₁, ±Y₁) of the governor rope 10 at a certain time with respect to the base position (Xo, Yo) in the horizontal plane of the hoistway (X-Y plane), which can be determined from the rope sway of the governor rope 10 in the transverse direction (left-right direction) with respect to the base position (i.e. the angle) and the distance between the TOF camera 15 and the governor rope 10. Then, the risk analysis unit 17 calculates vibration direction and amplitude of the governor rope 10 at three heights of the TOF cameras 15 at the certain time based on the difference between actual position (±X₁, ±Y₁) and the base position (Xo, Yo) of the governor rope 10. This process is repeated and the calculated data are monitored in time series.

Subsequently, the risk analysis unit 17 calculates vibration mode of the governor rope 10 from the amplitude changes at each height of the TOF cameras 15 on one vibration plane of the governor rope 10 in time series. Since the governor rope 10 is tightened by the governor sheave 8 and the tension sheave 9 over the entire length of the hoistway and thus the tension of the governor rope 10 is theoretically constant, the vibration mode of the governor rope 10 can be obtained more accurately than the elevator main ropes 6. Moreover, since the RSD controller 14 in accordance with the present invention utilizes monitoring data of the governor rope along the first path 10a which is not attached to the elevator car 2 for detecting abnormality of the elevator system 1 associated with building sway, there is no need to consider amplitude change and vibration mode change of elevator ropes 6 in response to length change of the ropes 6 between the elevator car 2 and the sheaves 4 when the elevator car 2 moves in the hoistway.

The risk analyst unit 17 then estimates the maximum amplitude of the governor rope 10 based on the calculated vibration mode and amplitude of the governor rope 10 at each height of the TOF cameras 15. For example, when the governor rope 10 is vibrating in mode 1 as shown in FIG. 4 (b), the maximum amplitude can be measured directly by the TOF camera 15 arranged at the middle of the hoistway because the vibration peak is formed in the intermediate position of the governor rope 10. On the other hand, when the governor rope 10 is vibrating in mode 2 as shown in FIG. 4 (c) or vibrating in mode n (n>2) as shown in FIG. 4 (d), the maximum amplitude of the governor rope 10 cannot be measured directly since the vibration peaks (e.g. P₂ in FIG. 4 (c) and Pₙ in FIG. 4 (d)) are formed in areas out of the sight of the TOF cameras 15. However, in the present invention, since the vibration mode of the governor rope 10 is estimated based on the amplitude changes at three different heights of the TOF cameras 15 on one vibration plane of the governor rope 10 in time series, the RSD controller 14 in accordance with the present invention can estimate the maximum amplitude of the governor rope 10 regardless of the position of oscillation peaks. By applying the system in accordance with the present invention, rope sway detection of the governor rope 10 and thus an abnormal condition detection of an elevator system relating to building sway can be performed more accurately with a small number of cameras than a prior art rope sway detection system. It is particularly advantageous when the RSD controller 14 in accordance with the present invention is installed in a high-rise building.

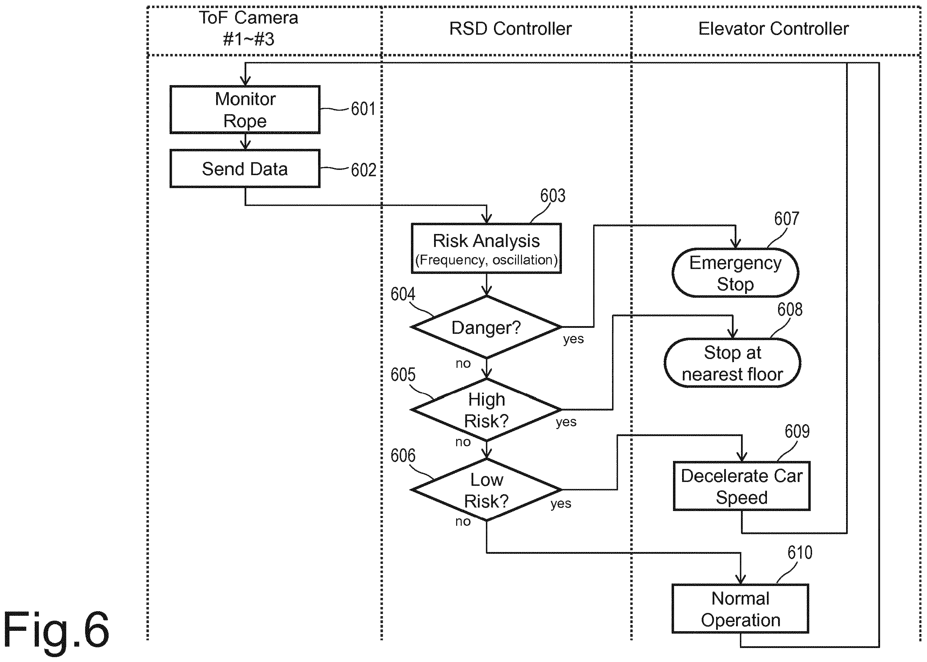

Figure 6 illustrates a control method of an elevator system based on the maximum amplitude of the governor rope 10 estimated by the RSD controller 14 in accordance with the present invention. At step 601, TOF cameras 15 disposed at different heights in the hoistway at equal intervals along the first path 10a of the governor rope as described above with reference to FIG. 3 are monitoring rope sway of the governor rope 10 along the first path 10a. A real-time image including image data and distance data of the governor rope 10 is transmitted to the risk analysis unit 17 of the RSD controller 14 at step 602.

The RSD controller 14 then proceeds to step 603 which estimates a maximum amplitude of the governor rope 10 based on the calculated vibration mode and amplitude of the governor rope 10 at each height of the TOF cameras 15 as described above and compares the maximum amplitude with three threshold values in order to control the operation of the elevator system 1. The threshold values are predetermined maximum amplitude values which may be set by taking into consideration the length, linear density and tension of the governor rope 10, the height of a building, etc.

At step 604, the maximum amplitude of the governor rope 10 is compared with a first threshold value. If the maximum amplitude exceeds the first threshold value, then the risk analysis unit 17 of the RSD controller 14 determines that the elevator system is in an abnormal condition and immediately transmits a signal to stop the elevator car 2 to the elevator controller 19 (step 607). Upon detecting the emergency stop condition at step 607, the elevator controller 19 may additionally generate a warning to an elevator service company for an inspection. Once the abnormal condition is cleared, the elevator controller 19 allows the RSD controller 14 to resume operation and the algorithm returns to step 601 to repeat process. If the maximum amplitude is less than the first threshold, then the algorithm proceeds to step 605 and the maximum amplitude is compared with a second threshold value that is less than the first threshold value.

At step 605, if the maximum amplitude exceeds the second threshold value, then the risk analysis unit 17 determines that the risk of causing the main ropes 6 as well as the governor rope 10 to sway and collide against the elevator equipments is high, and the risk analysis unit 17 transmits a signal to the elevator controller 19 to stop the elevator car 2 at the nearest floor in order to allow the passengers to exit (step 608). Once the abnormal condition is cleared, the RSD controller 14 may be restarted either manually or automatically in a known manner and the algorithm returns to step 601 to repeat process. If the maximum amplitude is less than the second threshold, then the algorithm proceeds to step 606 and the maximum amplitude is further compared with a third threshold value that is less than the second threshold value.

At step 606, if the maximum amplitude exceeds the third threshold value, then the risk analysis unit 17 determines that the risk of causing the main ropes 6 as well as the governor rope 10 to sway and collide against the elevator equipments is relatively low, and the risk analysis unit 17 transmits a signal to the elevator controller 19 to decelerate car speed at step 609, followed by returning to step 601 to repeat process. If the maximum amplitude is less than the third threshold, then the risk analysis unit 17 of the RSD controller 14 determines that the elevator system 1 is in a normal condition (step 610). Following the execution of step 610, the algorithm returns to step 601 to repeat process.

Although a particular embodiment has been described with respect to rope sway detection of the governor rope 10 for the elevator car 2, the rope sway detection system according to the present invention may also be applied to the governor rope for a counter weight.

## Claims

1. An elevator system (1), comprising;
a hoistway;
an elevator controller (19);
an abnormal condition detection device; and
a governor (7) having a governor rope (10) wrapped around a governor sheave (8) and a tension sheave (9); and
**characterized in that**
the abnormal condition detection device comprises:
a plurality of TOF cameras (15) each disposed at different heights in the hoistway and configured to monitor rope sway of the governor rope (10) and capture an image of the governor rope (10) at each height of the TOF cameras (15), the image including image data and distance data of the governor rope (10); and
a rope sway detector controller (14) connected to the TOF cameras (15) for detecting rope sway of the governor rope (10) and transmitting an abnormal condition detection signal to the elevator controller (19),
wherein the rope sway detector controller (14) is configured to detect an abnormal condition of the governor rope (10) by estimating a maximum amplitude of the governor rope (10) based on a vibration mode of the governor rope (10) and amplitude of the governor rope (10) at each height of the TOF cameras (15), and the vibration mode of the governor rope (10) is calculated from amplitude changes of the governor rope at each height of the TOF cameras in time series.

2. The device of claim 1, wherein the amplitude changes of the governor rope (10) at each height of the TOF cameras (15) are calculated based on the difference between an actual position and a normal position of the governor rope at each height of the TOF cameras (15) in time series.

3. The device of claim 2, wherein the actual position of the governor rope (10) is determined based on rope sway of the governor rope (10) in the transverse direction with respect to each TOF camera (15) and a distance between each TOF camera (15) and the governor rope.

4. The device of any preceding claim, wherein the governor rope (10) extends along a first path (10a) and a second path (10b) between the governor sheave (8) and the tension sheave (9) in a looped manner, the governor rope (10) is attached to the elevator car (2) at the second path (10b) adjacent to the elevator car (2), and the TOF cameras (15) are arranged adjacent to the first path (10a) of the governor rope (10) which is not attached to the elevator car (2), and
optionally wherein the governor rope (10) further comprises a plurality of governor rope guards (12) arranged along the vertical direction of the hoistway so as to accommodate the first path (10a) of the governor rope (10) which is not attached to the elevator car (2).

5. The device of claim 4, wherein each TOF camera (15) monitors rope sway of the governor rope (10) along the first path (10a).

6. The device of any preceding claim, wherein the elevator controller (19) is configured to control operation of the elevator car (2) based on the maximum amplitude of the governor rope (10).

7. The device of any preceding claim, wherein the rope sway detector controller (14) is configured to detect the abnormal condition if the maximum amplitude exceeds a threshold value.

8. The device of claim 7, wherein the rope sway detector controller (14) transmits to the elevator controller (19) a signal to immediately stop the elevator car (2) if the maximum amplitude exceeds a first threshold value.

9. The device of claim 8, wherein the rope sway detector controller (14) transmits to the elevator controller (19) a signal to stop the elevator car (2) at the nearest floor if the maximum amplitude exceeds a second threshold value that is less than the first threshold value.

10. The device of claim 9, wherein the rope sway detector controller (14) transmits to the elevator controller (19) a signal to decelerate elevator car (2) speed if the maximum amplitude exceeds a third threshold value that is less than the second threshold value.

11. A method for detecting abnormal condition of an elevator (2) relating to rope sway, **characterized by** the steps of:
monitoring rope sway of a governor rope (10) using a plurality of TOF cameras (15) each disposed at different heights in a hoistway;
sending an image of the governor rope (10) taken by each TOF camera (15) to a rope sway detector controller (14), the image including image data and distance data of the governor rope (10);
calculating vibration mode of the governor rope based on amplitude changes of the governor rope (10) at each height of the TOF cameras (15) on one vibration plane of the governor rope (10) in time series;
estimating a maximum amplitude of the governor rope (10) based on the vibration mode of the governor rope (10) and amplitude of the governor rope (10) at each height of the TOF cameras (15); and
detecting abnormal condition of the elevator (2) if the maximum amplitude exceeds a threshold value.

12. The method of claim 11, further comprising the step of:
calculating an actual position of the governor rope (10) in time series with respect to a normal position in a horizontal plane of the hoistway at each height of the TOF cameras (15), based on rope sway of the governor rope (10) in the transverse direction with respect to each TOF camera (15) and a distance between each TOF camera (15) and the governor rope (10).

13. The method of claim 12, further comprising the step of:
calculating vibration direction and amplitude of the governor rope (10) at each height of the TOF cameras (15) in time series, based on the difference between the actual position and the normal position of the governor rope (10).

14. The method of any of claims 11-13, wherein detecting abnormal condition further comprising transmitting a signal to immediately stop the elevator car (2) to an elevator controller (19) if the maximum amplitude exceeds a first threshold value.

15. The method of claim 14, wherein detecting abnormal condition further comprising transmitting a signal to stop the elevator car (2) at the nearest floor to the elevator controller (19) if the maximum amplitude exceeds a second threshold value that is less than the first threshold value, and optionally
wherein detecting abnormal condition further comprising transmitting a signal to decelerate elevator car (2) speed to the elevator controller (19) if the maximum amplitude exceeds a third threshold value that is less than the second threshold value.

## Patentansprüche

1. Aufzugssystem (1), umfassend:
einen Aufzugsschacht;
eine Aufzugssteuerung (19);
eine Vorrichtung zum Erfassen eines anormalen Zustands; und
einen Begrenzer (7) mit einem Begrenzerseil (10), das um eine Begrenzerscheibe (8) und eine Spannscheibe (9) gewickelt ist; und
**dadurch gekennzeichnet, dass** die Vorrichtung zum Erfassen eines anormalen Zustands Folgendes umfasst:
eine Vielzahl von TOF-Kameras (15), die jeweils auf unterschiedlichen Höhen im Aufzugsschacht angeordnet und konfiguriert sind, um die Seilschwingung des Begrenzerseils (10) zu überwachen und ein Bild des Begrenzerseils (10) auf jeder Höhe der TOF-Kameras (15) aufzunehmen, wobei das Bild Bilddaten und Entfernungsdaten des Begrenzerseils (10) umfasst; und
eine mit den TOF-Kameras (15) verbundene Seilschwingungsdetektorsteuerung (14) zum Erfassen einer Seilschwingung des Begrenzerseils (10) und zum Übertragen eines Erfassungssignals für einen anormalen Zustand an die Aufzugssteuerung (19),
wobei die Seilschwingungsdetektorsteuerung (14) so konfiguriert ist, dass sie einen anormalen Zustand des Begrenzerseils (10) durch Schätzen einer maximalen Amplitude des Begrenzerseils (10) basierend auf einem Vibrationsmodus des Begrenzerseils (10) und einer Amplitude des Begrenzerseils (10) auf jeder Höhe der TOF-Kameras (15) erfasst und der Vibrationsmodus des Begrenzerseils (10) aus Amplitudenänderungen des Begrenzerseils auf jeder Höhe der TOF-Kameras in Zeitreihen berechnet wird.

2. Vorrichtung nach Anspruch 1, wobei die Amplitudenänderungen des Begrenzerseils (10) auf jeder Höhe der TOF-Kameras (15) basierend auf der Differenz zwischen einer tatsächlichen Position und einer normalen Position des Begrenzerseils auf jeder Höhe der TOF-Kameras (15) in Zeitreihen berechnet werden.

3. Vorrichtung nach Anspruch 2, wobei die tatsächliche Position des Begrenzerseils (10) basierend auf einer Seilschwingung des Begrenzerseils (10) in der Querrichtung in Bezug auf jede TOF-Kamera (15) und einer Entfernung zwischen jeder TOF-Kamera (15) und dem Begrenzerseil bestimmt wird.

4. Vorrichtung nach einem der vorhergehenden Ansprüche, wobei sich das Begrenzerseil (10) entlang eines ersten Wegs (10a) und eines zweiten Wegs (10b) zwischen der Begrenzerscheibe (8) und der Spannscheibe (9) schleifenförmig erstreckt, das Begrenzerseil (10) an der Aufzugskabine (2) am zweiten Weg (10b) neben der Aufzugskabine (2) befestigt ist und die TOF-Kameras (15) neben dem ersten Weg (10a) des Begrenzerseils (10), das nicht an der Aufzugskabine (2) befestigt ist, angeordnet sind, und
wobei optional das Begrenzerseil (10) ferner eine Vielzahl von Begrenzerseilsicherungen (12) umfasst, die entlang der vertikalen Richtung des Aufzugsschachts angeordnet sind, um den ersten Weg (10a) des Begrenzerseils (10) aufzunehmen, das nicht an der Aufzugskabine (2) befestigt ist.

5. Vorrichtung nach Anspruch 4, wobei jede TOF-Kamera (15) die Seilschwingung des Begrenzerseils (10) entlang des ersten Wegs (10a) überwacht.

6. Vorrichtung nach einem der vorhergehenden Ansprüche, wobei die Aufzugssteuerung (19) so konfiguriert ist, dass sie den Betrieb der Aufzugskabine (2) basierend auf der maximalen Amplitude des Begrenzerseils (10) steuert.

7. Vorrichtung nach einem der vorhergehenden Ansprüche, wobei die Seilschwingungsdetektorsteuerung (14) so konfiguriert ist, dass sie den anormalen Zustand erfasst, wenn die maximale Amplitude einen Schwellenwert überschreitet.

8. Vorrichtung nach Anspruch 7, wobei die Seilschwingungsdetektorsteuerung (14) an die Aufzugssteuerung (19) ein Signal zum sofortigen Anhalten der Aufzugskabine (2) übermittelt, wenn die maximale Amplitude einen ersten Schwellenwert überschreitet.

9. Vorrichtung nach Anspruch 8, wobei die Seilschwingungsdetektorsteuerung (14) an die Aufzugssteuerung (19) ein Signal zum Anhalten der Aufzugskabine (2) auf dem nächsten Stockwerk sendet, wenn die maximale Amplitude einen zweiten Schwellenwert überschreitet, der kleiner als der erste Schwellenwert ist.

10. Vorrichtung nach Anspruch 9, wobei die Seilschwingungsdetektorsteuerung (14) an die Aufzugssteuerung (19) ein Signal überträgt, um die Geschwindigkeit der Aufzugskabine (2) zu verlangsamen, wenn die maximale Amplitude einen dritten Schwellenwert überschreitet, der kleiner als der zweite Schwellenwert ist.

11. Verfahren zum Erfassen eines anormalen Zustands eines Aufzugs (2) in Bezug auf ein Seilschwingen, **gekennzeichnet durch** die Schritte:
Überwachen der Seilschwingung eines Begrenzerseils (10) unter Verwendung einer Vielzahl von TOF-Kameras (15), die jeweils auf unterschiedlichen Höhen in einem Aufzugsschacht angeordnet sind;
Senden eines von jeder TOF-Kamera (15) aufgenommenen Bilds des Begrenzerseils (10) an eine Seilschwingungsdetektorsteuerung (14), wobei das Bild Bilddaten und Entfernungsdaten des Begrenzerseils (10) umfasst;
Berechnen des Vibrationsmodus des Begrenzerseils basierend auf Amplitudenänderungen des Begrenzerseils (10) auf jeder Höhe der TOF-Kameras (15) auf einer Vibrationsebene des Begrenzerseils (10) in Zeitreihen;
Schätzen einer maximalen Amplitude des Begrenzerseils (10) basierend auf dem Vibrationsmodus des Begrenzerseils (10) und der Amplitude des Begrenzerseils (10) auf jeder Höhe der TOF-Kameras (15); und
Erfassen eines anormalen Zustands des Aufzugs (2), wenn die maximale Amplitude einen Schwellenwert überschreitet.

12. Verfahren nach Anspruch 11, ferner umfassend den folgenden Schritt:
Berechnen einer tatsächlichen Position des Begrenzerseils (10) in Zeitreihen in Bezug auf eine normale Position in einer horizontalen Ebene des Aufzugsschachts auf jeder Höhe der TOF-Kameras (15), basierend auf einer Seilschwingung des Begrenzerseils (10) in der Querrichtung in Bezug auf jede TOF-Kamera (15) und einer Entfernung zwischen jeder TOF-Kamera (15) und dem Begrenzerseil (10).

13. Verfahren nach Anspruch 12, ferner umfassend den folgenden Schritt:
Berechnen der Vibrationsrichtung und -amplitude des Begrenzerseils (10) auf jeder Höhe der TOF-Kameras (15) in Zeitreihen, basierend auf der Differenz zwischen der tatsächlichen Position und der normalen Position des Begrenzerseils (10).

14. Verfahren nach einem der Ansprüche 11-13, wobei das Erfassen eines anormalen Zustands ferner das Übertragen eines Signals zum sofortigen Anhalten der Aufzugskabine (2) an eine Aufzugssteuerung (19) umfasst, wenn die maximale Amplitude einen ersten Schwellenwert überschreitet.

15. Verfahren nach Anspruch 14, wobei das Erfassen eines anormalen Zustands ferner das Übertragen eines Signals zum Anhalten der Aufzugskabine (2) auf dem nächsten Stockwerk zu der Aufzugssteuerung (19) umfasst, wenn die maximale Amplitude einen zweiten Schwellenwert überschreitet, der kleiner als der erste Schwellenwert ist, und
wobei optional das Erfassen eines anormalen Zustands ferner das Übertragen eines Signals zum Verlangsamen der Geschwindigkeit der Aufzugskabine (2) an die Aufzugssteuerung (19) umfasst, wenn die maximale Amplitude einen dritten Schwellenwert überschreitet, der kleiner als der zweite Schwellenwert ist.

## Revendications

1. Système d'ascenseur (1) comprenant :
une cage d'ascenseur ;
un organe de commande d'ascenseur (19) ;
un dispositif de détection d'état anormal ; et
un régulateur (7) ayant un câble de régulateur (10) enroulé autour d'une poulie de régulateur (8) et d'une poulie de tension (9) ; et
**caractérisé en ce que** le dispositif de détection d'état anormal comprend :
une pluralité de caméras TOF (15) chacune disposée à différentes hauteurs dans la cage d'ascenseur et configurées pour surveiller le balancement du câble de régulateur (10) et capturer une image du câble de régulateur (10) à chaque hauteur des caméras TOF (15), l'image comportant des données d'image et des données de distance du câble de régulateur (10) ; et
un organe de commande de détecteur de balancement de câble (14) connecté aux caméras TOF (15) pour détecter le balancement du câble de régulateur (10) et transmettre un signal de détection d'état anormal à l'organe de commande d'ascenseur (19),
dans lequel le dispositif de commande de détecteur de balancement de câble (14) est configuré pour détecter un état anormal du câble de régulateur (10) en estimant une amplitude maximale du câble de régulateur (10) sur la base d'un mode de vibration du câble de régulateur (10) et d'une amplitude du câble de régulateur (10) à chaque hauteur des caméras TOF (15), et le mode de vibration du câble de régulateur (10) est calculé à partir des variations d'amplitude du câble de régulateur à chaque hauteur des caméras TOF dans des séries temporelles.

2. Dispositif selon la revendication 1, dans lequel les variations d'amplitude du câble de régulateur (10) à chaque hauteur des caméras TOF (15) sont calculées sur la base de la différence entre une position réelle et une position normale du câble de régulateur à chaque hauteur des caméras TOF (15) dans des séries temporelles.

3. Dispositif selon la revendication 2, dans lequel la position réelle du câble de régulateur (10) est déterminée sur la base du balancement du câble de régulateur (10) dans la direction transversale par rapport à chaque caméra TOF (15) et d'une distance entre chaque caméra TOF (15) et le câble de régulateur.

4. Dispositif selon une quelconque revendication précédente, dans lequel le câble de régulateur (10) s'étend le long d'un premier chemin (10a) et d'un second chemin (10b) entre la poulie de régulateur (8) et la poulie de tension (9) en boucle, le câble de régulateur (10) est fixé à la cabine d'ascenseur (2) au niveau du second chemin (10b) adjacent à la cabine d'ascenseur (2), et les caméras TOF (15) sont disposées adjacentes au premier chemin (10a) du câble de régulateur (10) qui n'est pas fixé à la cabine d'ascenseur (2), et
éventuellement dans lequel le câble de régulateur (10) comprend en outre une pluralité de protections de câble de régulateur (12) disposées le long de la direction verticale de la cage d'ascenseur de façon à recevoir le premier chemin (10a) du câble de régulateur (10) qui n'est pas fixé à la cabine d'ascenseur (2) .

5. Dispositif selon la revendication 4, dans lequel chaque caméra TOF (15) surveille le balancement de câble du câble de régulateur (10) le long du premier chemin (10a).

6. Dispositif selon une quelconque revendication précédente, dans lequel l'organe de commande d'ascenseur (19) est configuré pour commander le fonctionnement de la cabine d'ascenseur (2) sur la base de l'amplitude maximale du câble de régulateur (10).

7. Dispositif selon une quelconque revendication précédente, dans lequel l'organe de commande de détecteur de balancement de câble (14) est configuré pour détecter l'état anormal si l'amplitude maximale dépasse une valeur seuil.

8. Dispositif selon la revendication 7, dans lequel l'organe de commande de détecteur de balancement de câble (14) transmet à l'organe de commande d'ascenseur (19) un signal pour arrêter immédiatement la cabine d'ascenseur (2) si l'amplitude maximale dépasse une première valeur seuil.

9. Dispositif selon la revendication 8, dans lequel l'organe de commande de détecteur de balancement de câble (14) transmet à l'organe de commande d'ascenseur (19) un signal pour arrêter la cabine d'ascenseur (2) à l'étage le plus proche si l'amplitude maximale dépasse une deuxième valeur seuil qui est inférieure à la première valeur seuil.

10. Dispositif selon la revendication 9, dans lequel l'organe de commande de détecteur de balancement de câble (14) transmet à l'organe de commande d'ascenseur (19) un signal pour ralentir la cabine d'ascenseur (2) si l'amplitude maximale dépasse une troisième valeur seuil qui est inférieure à la deuxième valeur seuil.

11. Procédé de détection d'un état anormal d'un ascenseur (2) concernant le balancement de câble, **caractérisé par** les étapes consistant à :
surveiller le balancement de câble d'un câble de régulateur (10) à l'aide d'une pluralité de caméras TOF (15) chacune disposée à différentes hauteurs dans une cage d'ascenseur ;
envoyer une image du câble de régulateur (10) prise par chaque caméra TOF (15) à un organe de commande de détecteur de balancement de câble (14), l'image comportant des données d'image et des données de distance du câble de régulateur (10) ;
calculer le mode de vibration du câble de régulateur sur la base des variations d'amplitude du câble de régulateur (10) à chaque hauteur des caméras TOF (15) sur un plan de vibration du câble de régulateur (10) dans des séries temporelles ;
estimer une amplitude maximale du câble de régulateur (10) sur la base du mode de vibration du câble de régulateur (10) et de l'amplitude du câble de régulateur (10) à chaque hauteur des caméras TOF (15) ; et
détecter un état anormal de l'ascenseur (2) si l'amplitude maximale dépasse une valeur seuil.

12. Procédé selon la revendication 11, comprenant en outre les étapes de :
calcul d'une position réelle du câble de régulateur (10) dans des séries temporelles par rapport à une position normale dans un plan horizontal de la cage d'ascenseur à chaque hauteur des caméras TOF (15), sur la base du balancement du câble de régulateur (10) dans la direction transversale par rapport à chaque caméra TOF (15) et d'une distance entre chaque caméra TOF (15) et le câble de régulateur (10).

13. Procédé selon la revendication 12, comprenant en outre l'étape de :
calcul de la direction de vibration et de l'amplitude du câble de régulateur (10) à chaque hauteur des caméras TOF (15) dans des séries temporelles, sur la base de la différence entre la position réelle et la position normale du câble de régulateur (10) .

14. Procédé selon l'une quelconque des revendications 11 à 13, dans lequel la détection d'un état anormal comprenant en outre la transmission d'un signal à un organe de commande d'ascenseur (19) pour arrêter immédiatement la cabine d'ascenseur (2) si l'amplitude maximale dépasse une première valeur seuil.

15. Procédé selon la revendication 14, dans lequel la détection d'un état anormal comprenant en outre la transmission d'un signal à l'organe de commande d'ascenseur (19) pour arrêter la cabine d'ascenseur (2) à l'étage le plus proche si l'amplitude maximale dépasse une deuxième valeur seuil qui est inférieure à la première valeur seuil, et éventuellement
dans lequel la détection d'un état anormal comprenant en outre la transmission d'un signal à l'organe de commande d'ascenseur (19) pour ralentir la vitesse de la cabine d'ascenseur (2) si l'amplitude maximale dépasse une troisième valeur seuil qui est inférieure à la deuxième valeur seuil.
